# EUROPÄISCHE PATENTSCHRIFT

(11) **EP 0 468 249 B1**
(45) Veröffentlichungstag und Bekanntmachung des Hinweises auf die Patenterteilung: **27.09.1995**
(21) Anmeldenummer: 91111175.5
(22) Anmeldetag: 05.07.1991
(51) Int. Cl.: G01N 27/407

(54) **Verfahren zur Herstellung eines CO2-Sensors**
Method for manufacturing a CO2-sensor
Procédé de fabrication d'un capteur de CO2

(30) Priorität: 11.07.1990 DE 4022136
(43) Veröffentlichungstag der Anmeldung: 29.01.1992
(73) Patentinhaber: ROTH-TECHNIK GMBH & Co. Forschung für Automobil- und Umwelttechnik, 76571 Gaggenau (DE)
(72) Erfinder: Chu, Wing Fong, Dr., W-6000 Frankfurt am Main (DE); Erdmann, Hartmut, W-6374 Steinbach/Ts. (DE); Leonhard, Volker, Dr., W-6000 Frankfurt am Main 50 (DE); Ilgenstein, Marianne, W-6237 Liederbach (DE)
(74) Vertreter: Säger, Manfred, Dipl.-Ing.

(56) Entgegenhaltungen:
- EP-A- 0 182 921
- SOLID STATE IONICS, Band 23, 1987, Seiten 107-112, Amsterdam, NL ; T. MARUYAMA et al. : "Potentiometric gas sensor for carbon dioxide using solid electrolytes"
- SOLID STATE IONICS, Band 24, Nr. 4, September 1987, Seiten 281-287, Amsterdam, NL ; T. MARUYAMA et al. : "Electromotive force of a CO-CO2 sensor in CO-CO2-H2-H2O atmospheres and simultaneous determination of partial pressures of CO and CO2"
- A.F. Holleman und E. Wiberg: LEHRBUCH DER ANORGANISCHEN CHEMIE, 40.-46. Auflage, 1958, Walter de Gruyter & Co, Berlin, DE; Seite 428

## Beschreibung

Die Erfindung betrifft ein Verfahren zur Herstellung eines CO₂-Sensors, der eine in Dickschichttechnik auf ein Substrat aufgebrachte elektrochemische Zelle mit Festkörperionenleitern mit einer Arbeitselektrode, einem Festelektrolyten und einer Gegenelektrode aufweist. wobei die auf das Substrat aufgebrachten Bestandteile zwecks Sinterung der keramischen Bestandteile erwärmt werden.

Zum Stand der Technik wird auch verwiesen auf einen Aufsatz von Maruyama und Mitarbeitern, erschienen in Solid State lonics 23 (1987), Seiten 107 bis 112. Dort wird ein CO₂-Sensor beschrieben, der aus Festkörperionenleitern besteht, wobei Na₂CO₃, Nasicon und Goldpaste in Tablettenform verwendet werden.

Es hat sich jedoch herausgestellt, daß man für die Arbeitselektrode Na₂CO₃, K₂CO₃ oder Li₂CO₃ in Dickschichttechnik nicht direkt aufdrucken kann, weil diese Substanzen hygroskopisch sind. Bei der Herstellung der Suspension zum Bedrucken wären somit die rheologischen Eigenschaften der Paste oder Suspension nicht reproduzierbar, weil sich deren Viskosität ändern kann.

Ausgehend von einem Verfahren mit den eingangs genannten Merkmalen liegt daher der Erfindung die Aufgabe zugrunde, dieses so zu führen, daß die sensitive Beschichtung der Arbeitselektrode mit reproduzierbaren Eigenschaften hergestellt wird.

Zur Lösung dieser Aufgabe ist die Erfindung dadurch gekennzeichnet, daß zur Herstellung der Arbeitselektrode auf Teilen des Festelektrolyten Pt und/oder Au aufgedruckt wird/werden und anschließend die Arbeitselektrode mit einer sensitiven Beschichtung versehen wird, für die als Ausgangsmaterial eine Suspension aus NaHCO₃, KHCO₃ und/oder LiHCO₃ verwendet wird, welches Ausgangsmaterial beim Erwärmen zu Na₂CO₃, K₂CO₃ bzw. Li₂CO₃ umgesetzt wird.

Man verwendet somit als Ausgangsmaterial für die sensitive Beschichtung der Arbeitselektrode die angegebenen Materialien, die nicht hygroskopisch sind und die sich daher mit exakt reproduzierbaren Eigenschaften herstellen lassen. Diese werden beim Erhitzen in die genannten und jeweils gewünschten Endprodukte umgewandelt, wobei gleichzeitig entstehende Umwandlungsprodukte verdampfen.

Die Beständigkeit der sensitiven Beschichtung der Arbeitselektrode wird weiterhin erhöht, wenn der Ausgangssuspension für die Arbeitselektrode vor dem Brennen MCO₃ oder A₂CO₃ in Anteilen von bis zu 10 Mol% zugemischt wird, vorzugsweise in Anteilen von 1 bis 8 Mol% mit M = Sr oder Ba und A = Li oder K. Diese Zumischung erhöht gleichzeitig die elektrische Leitfähigkeit der betreffenden Substanzen.

Eine wichtige Ausgestaltung der Erfindung ist dadurch gekennzeichnet, daß bei der Arbeitselektrode Pt oder Au in Linienform, vorzugsweise mäanderförmig oder kammförmig, derart aufgedruckt wird, daß sich eine möglichst großflächige Berührung zwischen den drei Phasen Pt bzw. Au, der sensitiven Beschichtung und dem Festelektrolyten ergibt. Die Empfindlichkeit des Sensors ist an dieser Stelle nämlich von den sich hier berührenden drei Phasen (Pt bzw. Au, der sensitiven Beschichtung und dem Festelektrolyten) abhängig und durch die erwähnte Linienform von Pt bzw. Au wird die Berührungsfläche der drei Phasen entsprechend und fühlbar erhöht.

Bezüglich der Umwandlung der Ausgangsprodukte in die Endprodukte beim Erwärmen wird folgendes aufgeführt:

2NaHCO₃ zerfällt beim Erwärmen auf über 65°C in Co₂, H₂O und Na₂CO₃. Oberhalb von etwa 300°C ist die Umwandlung vollständig.

2KHCO₃ zerfällt beim Erhitzen auf etwa 200°C in K₂CO₃, H₂O und CO₂.

LiHCO₃ ist bis ca. 30°C stabil. 2LiHCO₃ zerfällt beim weiteren Erwärmen in Li₂CO₃ und H₂O und CO₂.

Beim Erwärmen ergibt sich also das jeweils gewünschte Endprodukt, und zwar zusammen mit Wasserdampf und CO₂, die gasförmig entweichen.

Bei der Herstellung des Sensors wird auf ein die Sensorkomponenten tragendes Substrat gleichzeitig vorzugsweise eine Heizschicht mit aufgedruckt, die für die notwendige Betriebstemperatur des Sensors sorgt, und zwar vorzugsweise auf die Unterseite des Substrats, weil dort Platz ist. Diese Maßnahmen sind durch die Zeitschrift "Battelle-Information" in ihren Grundzügen an sich bekannt.

Die Patentansprüche 4 bis 8 charakterisieren bevorzugte Ausführungsformen eines nach dem erfindungsgemäßen Verfahren hergestellten Sensors.

Anspruch 4 gibt dabei die grundsätzliche Zusammensetzung seines Festelektrolyten an, abhängig von der jeweils gewählten Zusammensetzung seiner Arbeitselektrode. Der Aufbau nach einer der in Anspruch 4 angegebenen Möglichkeiten bleibt bei allen Ausführungsformen beibehalten.

Die Ansprüche 5 bis 8 kennzeichnen Varianten der Zusammensetzung der Gegenelektrode des Sensors, wobei mit der Ausführungsform nach Anspruch 8 zusätzlich O₂ gemessen werden kann.

Die Erfindung wird im folgenden anhand von Ausführungsbeispielen näher erläutert, aus denen sich weitere wichtige Merkmale ergeben. Es zeigt:
- Fig. 1 - 4: schematisch vier Ausführungsformen von erfindungsgemäßen CO₂-Sensoren, jeweils in einer teilweise geschnittenen Seitenansicht und
- Fig. 5 und 6: Draufsichten auf die Sensoren zur Darstellung der Kammform (Fig. 5) bzw. Mäanderform (Fig. 6) des Pt- bzw. Au-Anteils der Arbeitselektrode der Sensoren.

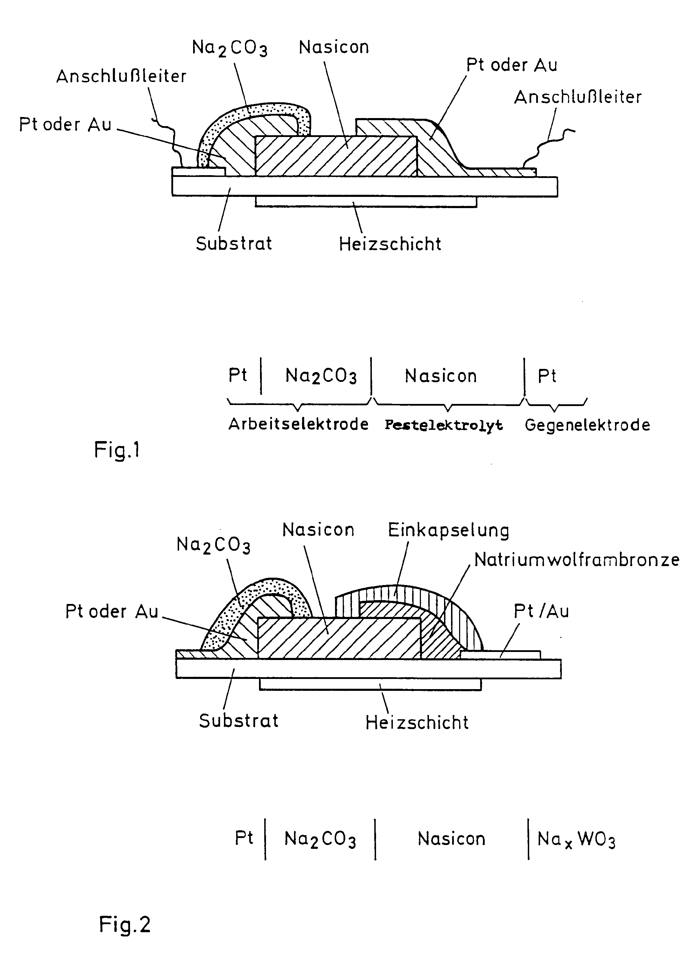

In Fig. 1 - 4 wurde zur Vereinfachung für die Arbeitselektrode nur Pt bzw. Au (porös) mit einer Beschichtung aus Na₂CO₃ eingezeichnet und für den Festelektrolyten wurde jeweils nur Nasicon angegeben. Diesbezüglich sind aber alle Kombinationen nach Patentanspruch 4 möglich.

Bezüglich der Gegenelektrode sind bei dem Ausführungsbeispiel nach Fig. 2 alle Kombinationen nach Patentanspruch 5 möglich.

In den Fig. 1, 3 und 4 wurden die jeweils möglichen Kombinationen der Gegenelektrode in diesen Figuren angegeben.

Zur Verdeutlichung wurde unter den Fig. 1 - 4 jeweils der Aufbau der betreffenden elektrochemischen Zelle entsprechend dem Beispiel der betreffenden Figur angegeben, wobei die Phasengrenzen durch senkrechte Striche voneinander getrennt sind.

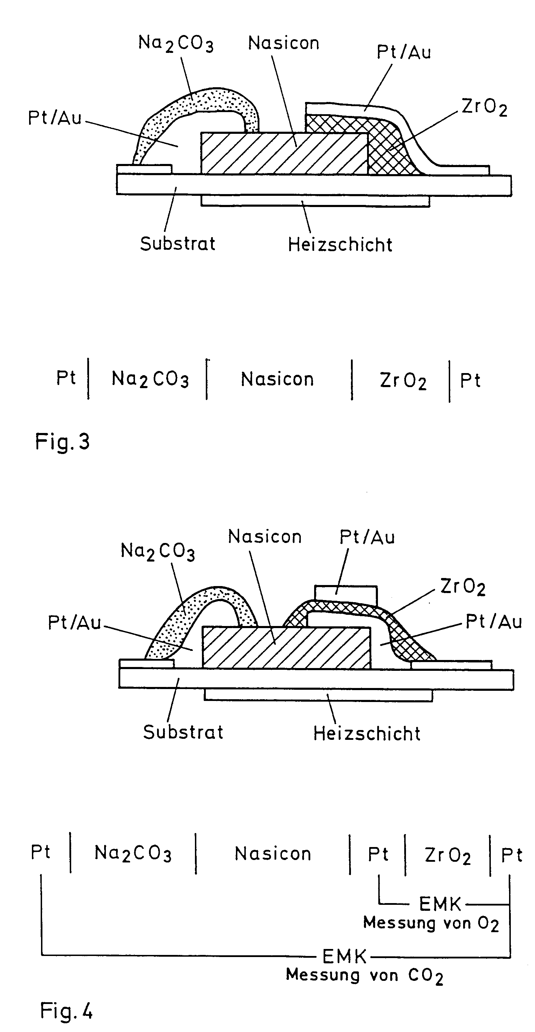

Es ergibt sich, daß in Fig. 1 und 3 effektiv nur der Partialdruck von CO₂ gemessen wird.

In Fig. 2 wird eine Zellspannung gemessen, die die Konzentration von CO₂ und O₂ zusammen angibt.

In Fig. 4 wird die Konzentration von CO₂ und zusätzlich und unabhängig davon diejenige von O₂ gemessen.

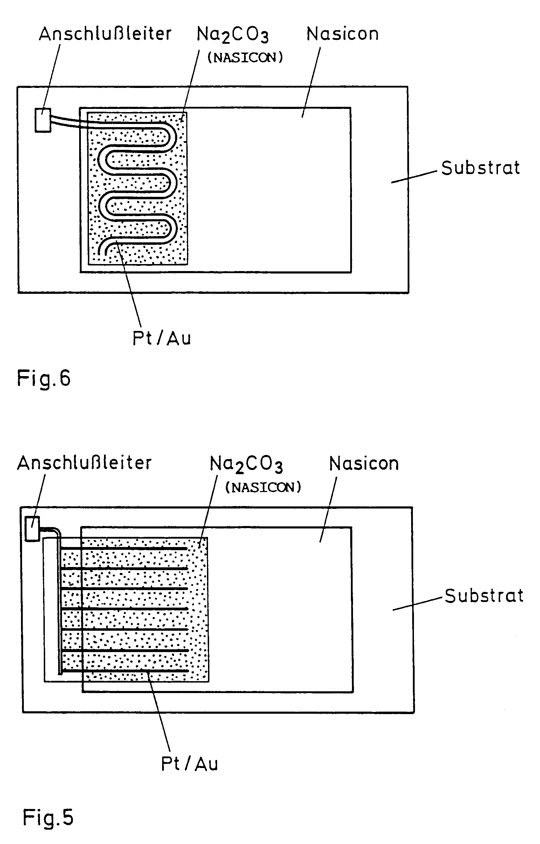

Die Fig. 5 und 6 zeigen die kammartige Form (Fig. 5) von Pt oder Au als Teil der Arbeitselektrode bzw. deren Mäanderform (Fig. 6). Diese Linienformen dienen zur Vergrößerung der Berührungsflächen zwischen den drei Phasen Pt bzw. Au, der sensitiven Beschichtung, z.B. Na₂CO₃, und dem Festelektrolyt, z.B. Nasicon.

Die Betriebstemperatur des Sensors, die mit Hilfe der Heizschicht erzielt wird, liegt je nach Ausführungsform zwischen etwa 100 und 600 °C.

Der Sensor wird in Dickschichttechnik, d. h. in Siebdrucktechnik hergestellt mit anschließender Erwärmung der aufgebrachten Schichten zwecks Sintern der Keramiken.

## Patentansprüche

1. Verfahren zur Herstellung eines CO₂-Sensors, der eine in Dickschichttechnik auf ein Substrat aufgebrachte elektrochemische Zelle mit Festkörperionenleitern mit einer Arbeitselektrode, einem Festelektrolyten und einer Gegenelektrode aufweist, wobei die auf das Substrat aufgebrachten Bestandteile erwärmt werden,
**dadurch gekennzeichnet,**
daß zur Herstellung der Arbeitselektrode auf Teilen des Festelektrolyten Pt und/oder Au aufgedruckt wird/werden und anschließend die Arbeitselektrode mit einer sensitiven Beschichtung versehen wird, für die eine Ausgangssuspension, die NaHCO₃, KHCO₃ und/oder LiHCO₃ aufweist, verwendet wird, welche Ausgangssuspension beim Erwärmen zu Na₂CO₃, K₂CO₃ bzw. Li₂CO₃ umgesetzt wird.

2. Verfahren nach Anspruch 1,
**dadurch gekennzeichnet**,
daß der Ausgangssuspension für die Arbeitselektrode vor dem Brennen MCO₃ oder A₂CO₃ und/oder Pulver, was aus dem Festelektrolyten besteht, in Anteilen von bis zu 10 Mol% zugemischt wird, vorzugsweise in Anteilen von 1 bis 8 Mol%, mit M = Sr oder Ba und A = Li oder K.

3. Verfahren nach Anspruch 1 oder 2,
**dadurch gekennzeichnet**,
daß bei der Arbeitselektrode Pt oder Au in Linienform derart aufgedruckt wird, daß sich eine möglichst großflächige Berührung zwischen den drei Phasen Pt bzw. Au, der sensitiven Beschichtung und dem Festelektrolyten ergibt.

4. CO₂-Sensor, hergestellt nach dem Verfahren nach einem der Ansprüche 1 bis 3,
**dadurch gekennzeichnet**,
daß sein Festelektrolyt aus Nasicon, Na-β-Al₂O₃ oder Titsikon besteht, wenn seine Arbeitselektrode Na₂CO₃ enthält, oder aus Khibinskit, Wadeit oder K-β-Al₂O₃ besteht, wenn seine Arbeitselektrode K₂CO₃ enthält, oder aus Li-β-Al₂O₃ oder LiAlF₆ besteht, wenn seine Arbeitselektrode Li₂CO₃ enthält.

5. CO₂-Sensor nach Anspruch 4,
**dadurch gekennzeichnet**,
daß seine Gegenelektrode aus NaₓWO₃, KₓWO₃ oder LiₓWO₃ besteht, wenn seine Arbeitselektrode Na₂CO₃, K₂CO₃ bzw. Li₂CO₃ enthält.

6. CO₂-Sensor nach Anspruch 4,
**dadurch gekennzeichnet**,
daß seine Gegenelektrode aus Pt und/oder Au besteht.

7. CO₂-Sensor nach Anspruch 4,
**dadurch gekennzeichnet**,
daß seine Gegenelektrode aus ZrO₂ mit einer Beschichtung aus Pt und/oder Au besteht.

8. CO₂-Sensor nach Anspruch 4,
**dadurch gekennzeichnet**,
daß seine Gegenelektrode aus Pt und/oder Au mit einer mittleren Beschichtung aus ZrO₂ und mit einer oberen Beschichtung aus Pt und/oder Au besteht.

## Claims

1. Method for manufacturing a CO₂ sensor, which comprises an electrochemical cell deposited on a substrate in thick-film technology, with solid-state ionic conductors with a working electrode, a solid electrolyte and a counter-electrode, wherein the components deposited on the substrate are heated, **characterised in that** for the manufacture of the working electrode Pt and/or Au is/are printed onto parts of the solid electrolyte and the working electrode is then provided with a sensitive coating, for which a starting suspension comprising NaHCO₃, KHCO₃ and/or LiHCO₃ is used, which starting suspension is converted on heating to Na₂CO₃, K₂CO₃ and/or Li₂CO₃.

2. Method according to claim 1, **characterised in that** there is admixed with the starting suspension for the working electrode, prior to the firing, MCO₃ or A₂CO₃ and/or powder, which consist of the solid electrolyte, in proportions of up to 10 mol. %, preferably in proportions of 1 to 8 mol. %, with M = Sr or Ba and A = Li or K.

3. Method according to claim 1 or 2, **characterised in that** in the case of the working electrode Pt or Au is printed on in line form in such a way that contact over as wide an area as possible between the three phases Pt or Au, the sensitive coating and the solid electrolyte is obtained.

4. CO₂ sensor, manufactured by the method according to any one of claims 1 to 3, **characterised in that** its solid electrolyte consists of Nasicon, Na-β-Al₂O₃ or Titsikon if its working electrode contains Na₂CO₃, or consists of Khibinskite, Wadeite or K-β-Al₂O₃ if its working electrode contains K₂CO₃, or consists of Li-β-Al₂O₃ or LiAlF₆ if its working electrode contains Li₂CO₃.

5. CO₂ sensor according to claim 4, **characterised in that** its counter-electrode consists of NaₓWO₃, KₓWO₃ or LiₓWO₃ if its working electrode contains Na₂CO₃, K₂CO₃ or Li₂CO₃ respectively.

6. CO₂ sensor according to claim 4, **characterised in that** its counter-electrode consists of Pt and/or Au.

7. CO₂ sensor according to claim 4, **characterised in that** its counter-electrode consists of ZrO₂ with a coating of Pt and/or Au.

8. CO₂ sensor according to claim 4, **characterised in that** its counter-electrode consists of Pt and/or Au with a middle coating of ZrO₂ and with an upper coating of Pt and/or Au.

## Revendications

1. Procédé de fabrication d'un capteur de CO₂, qui comporte une cellule électrochimique, appliquée sur un substrat par la technique des couches épaisses, avec des conducteurs d'ions de corps solides et une électrode de travail, un électrolyte solide et une contre-électrode, les constituants appliqués sur le substrat étant chauffés, caractérisé en ce que, pour fabriquer l'électrode de travail, on imprime sur des parties de l'électrode solide du Pt et/ou de l'Au, puis on applique sur l'électrode de travail un revêtement sensible, pour lequel on utilise comme matériau de départ une suspension de NaHCO₃, de KHCO₃ et/ou de LiHCO₃, lequel matériau de départ est, par chauffage, converti respectivement en Na₂CO₃, K₂CO₃, ou Li₂CO₃.

2. Procédé selon la revendication 1, caractérisé en ce qu'on mélange à la suspension de départ, pour l'électrode de travail avant la cuisson, du MCO₃ ou de l'A₂CO₃ et/ou une poudre constituée de l'électrolyte solide, en des quantités allant jusqu'à 10 % en mole, de préférence en des quantités de 1 à 8 % en mole, avec M=Sr ou Ba, et A = Li ou K.

3. Procédé selon la revendication 1 ou 2, caractérisé en ce que, dans l'électrode de travail, on imprime Pt ou Au sous forme de lignes de façon à réaliser un contact en surface aussi parfait que possible entre les trois phases Pt ou Au, le revêtement sensible et l'électrolyte solide.

4. Capteur de CO₂, fabriqué par le procédé selon l'une des revendications 1 à 3, caractérisé en ce que son électrolyte solide est constitué de nasicon, de Na-β-Al₂O₃ ou de titsikon, quand son électrode de travail contient du Na₂CO₃, ou encore de khibinskite, de wadéite ou de K-β-Al₂O₃, quand son électrode de travail contient du K₂CO₃, ou encore de Li-β-Al₂O₃, ou de LiAlF₆ quand son électrode de travail contient du Li₂CO₃.

5. Capteur de CO₂ selon la revendication 4, caractérisé en ce que sa contre-électrode est constituée de NaₓWO₃, de KₓWO₃ ou de Li_{X}WO₃ quand son électrode de travail contient respectivement du Na₂CO₃, du K₂CO₃ ou du Li₂CO₃.

6. Capteur de CO₂ selon la revendication 4, caractérisé en ce que sa contre-électrode est constituée de Pt et/ou de Au.

7. Capteur de CO₂ selon la revendication 4, caractérisé en ce que sa contre-électrode est constituée de ZrO₂ avec un revêtement de Pt et/ou de Au.

8. Capteur de CO₂ selon la revendication 4, caractérisé en ce que sa contre-électrode est constituée de Pt et/ou de Au, avec un revêtement central de ZrO₂ et un revêtement supérieur de Pt et/ou de Au.
